# EUROPÄISCHE PATENTSCHRIFT

(11) **EP 0 541 909 B1**
(45) Veröffentlichungstag und Bekanntmachung des Hinweises auf die Patenterteilung: **17.01.1996**
(21) Anmeldenummer: 92113041.5
(22) Anmeldetag: 30.07.1992
(51) Int. Cl.: H05B 41/29

(54) **Schaltungsanordnung zum Betrieb von Entladungslampen**
Discharge lamp driving circuit
Circuit pour alimenter des lampes à décharge

(30) Priorität: 12.11.1991 DE 4137207
(43) Veröffentlichungstag der Anmeldung: 19.05.1993
(73) Patentinhaber: Patent-Treuhand-Gesellschaft für elektrische Glühlampen mbH, D-81543 München (DE)
(72) Erfinder: Zuchtriegel, Anton, W-8028 Taufkirchen (DE); Sowa, Wolfram, Dr., W-8000 München 70 (DE)

(56) Entgegenhaltungen:
- EP-A- 0 360 156
- EP-A- 0 372 303

## Beschreibung

Die Erfindung betrifft eine Schaltungsanordnung zum Betrieb von Entladungslampen gemäß dem Oberbegriff des Patentanspruchs 1.

Eine derartige Schaltungsanordnung zum Betrieb von Entladungslampen, speziell von Niederdruckentladungslampen, sind in der US-PS 4 808 887 und in der EP-OS 372 303 offenbart.

Durch einen solchen Schaltungsaufbau werden zwar die bestehenden Vorschriften über eine möglichst sinusförmige Netzstromentnahme erfüllt, allerdings sind die von der Schaltungsanordnung mit dem überlicherweise verwendeten Tiefpaßfilter verursachten hochfrequenten Störspannungen auf den Netzzuleitungen noch nicht in gewünschtem Maße unterdrückt.

Es ist die Aufgabe der Erfindung, eine Schaltungsanordnung zum Betrieb von Entladungslampen bereitzustellen, die die in das Stromnetz eingespeisten Störspannungen mit einfachen und kostengünstigen Mitteln möglichst weitgehend reduziert.

Diese Aufgabe wird erfindungsgemäß durch die kennzeichnenden Merkmale des Patentanspruches 1 gelöst. Besonders vorteilhafte Ausführungen der Erfindung sind in den Unteransprüchen dargelegt.

Üblicherweise werden hochfrequente Störsignale in den Netzzuleitungen mittels zusätzlicher Induktivitäten und Kapazitäten, die als Tiefpaßfilter wirken, gedämpft. Die Erfindung beschreibt einen anderen Weg. Bei der erfindungsgemäßen Schaltung werden die hochfrequenten Störspannungen nicht einfach gedämpft, sondern durch ein gegenphasiges Signal gleicher Frequenz und passend bemessener Amplitude weitgehend kompensiert.

Versuche haben ergeben, daß eine weitgehende Kompensation der hochfrequenten Störspannungen bereits mit einem überraschend simplen Aufbau des Kopplungsgliedes, das im einfachsten Fall nur aus einer Kapazität oder aus einem RC-Glied besteht, möglich ist.

Experimentell kann die Dimensionierung des Kopplungsgliedes derart optimiert werden, daß der in das Stromnetz eingespeiste hochfrequente Störspannungspegel um mehr als 10 Dezibel gegenüber dem Stand der Technik (z.B. EP-OS 372 303) gesenkt wird, wenn die Einkopplung des hochfrequenten Kompensationssignals über das Kopplungsglied an einem Mittenabgriff zwischen den beiden Filterdrosseln erfolgt. Versuche, das hochfrequente Kompensationssignal an anderen Stellen auf der netzfrequenten Schaltungsseite, beispielsweise zwischen der stromkompensierten Filterdrossel und dem Netzgleichrichter oder zwischen der Netzspannungsquelle und der nicht stromkompensierten Filterdrossel, einzukoppeln und so eine Verringerung des hochfrequenten Störspannungspegels zu erreichen, blieben erfolglos.

Vorteilhafterweise enthält die Schaltungsanordnung parallel zu den Schaltstrecken der Transistoren einen Kondensator, der die Rechteckimpulse des Gegentaktfrequenzgenerators auf Trapezform trimmt und dadurch eine Verringerung des Oberwellenanteils sowie eine Verringerung der Verlustleistung beim Ummagnetisieren der Induktivitäten im Schaltkreis bewirkt.

Die Erfindung wird im folgenden anhand mehrerer Ausführungsbeispiele näher erläutert. Es zeigen:
- Figur 1: ein Blockschaltbild einer erfindungsgemäßen Schaltungsanordnung für eine Entladungslampe
- Figur 2: das vollständige Schaltbild einer erfindungsgemäßen Schaltungsanordnung für eine Niederdruckentladungslampe entsprechend den Ausführungsbeispielen 1 und 2.

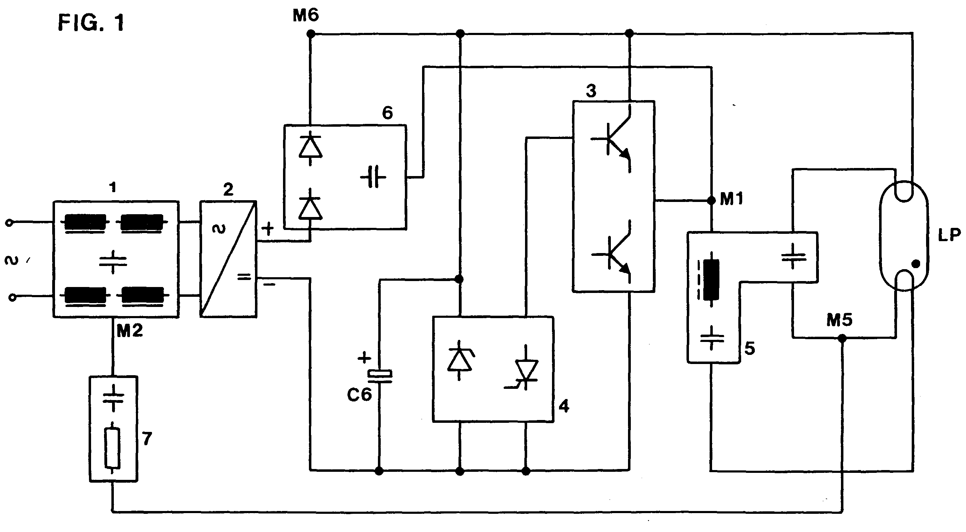

Das Blockschaltbild in Figur 1 gibt den prinzipiellen Aufbau einer erfindungsgemäßen Schaltungsanordnung für eine Entladungslampe wieder. Die Schaltungsanordnung beinhaltet ein Hochfrequenzfilter 1, einen Netzgleichrichter 2, einen Glättungskondensator C6, sowie einen Gegentaktfrequenzgenerator 3 mit Ansteuerschaltung und Abschaltvorrichtung 4. Zwischen dem Mittenabgriff M1 der Transistoren des Gegentaktfrequenzgenerators 3 und dem Pluspol des Netzgleichrichters 2 ist über einen Serienresonanzkreis 5 eine Entladungslampe LP geschaltet.

Außerdem enthält die Schaltungsanordnung ein aktives Oberwellenfilter 6, das einerseits mit dem Pluspol des Netzgleichrichters 2 und andererseits mit dem Mittenabgriff M1 verbunden ist. Ferner weist die Schaltungsanordnung ein Kopplungsglied 7 auf, das zwischen dem Mittenabgriff M2 der beiden Filterdrosseln des Hochfrequenzfilters 1 und einer Hochfrequenz führenden Zuleitung des Serienresonanzkreises 5 in die Schaltung integriert ist.

Die Funktionsweise von Serienresonanzkreis 5 und Gegentaktfrequenzgenerator 3 wird beispielsweise im Buch "Elektronikschaltungen" von W. Hirschmann, Siemens AG, auf Seite 148 beschrieben, Eine ausführliche Beschreibung des Zusammenwirkens der Abschaltvorrichtung 4, die die Schaltungsanordnung bei defekter Lampe LP ausschaltet, mit dem aktiven Oberwellenfilter 6 und dem Gegentaktfrequenzgenerator 3 findet sich in der EP-PS 276 460.

Über das Kopplungsglied 7 wird aus dem Serienresonanzkreis 5 ein Hochfrequenzsignal ausgekoppelt und zum Mittenabgriff M2 zwischen den Filterdrosseln des Hochfrequenzfilters 1 geführt. Die technischen Kenngrößen der Bauelemente des Kopplungsgliedes 7 sind experimentell derart optimiert, daß das beim Mittenabgriff M2 eingekoppelte HF-Signal die gleiche Frequenz wie die hochfrequenten Störspannungen besitzt und diese gegenphasig mit annähernd gleicher Amplitude überlagert, so daß der in das Stromnetz eingespeiste hochfrequente Störspannungspegel um mehr als 10 dB gesenkt wird.

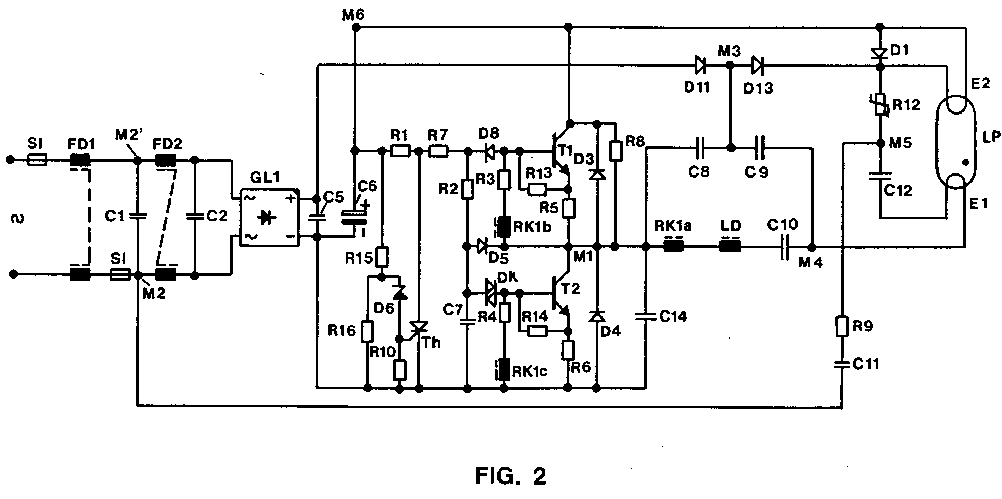

Figur 2 zeigt das vollständige Schaltbild einer erfindungsgemäßen Schaltungsanordnung für eine Leuchtstofflampe gemäß der ersten beiden Ausführungsbeispiele.

Die Tabellen 1 und 2 geben die Dimensionierung der elektrischen Bauteile aus Figur 1 für eine Niederdruckentladungslampe mit einer elektrischen Leistungsaufnahme von 18 W bzw. 26 W wieder.

Das dem Netzgleichrichter 2 vorgeschaltete Hochfrequenzfilter 1 besteht hier aus einer stromkompensierten Filterdrossel FD2 und einer nicht stromkompensierten Filterdrossel FD1 mit jeweils zwei Wicklungsblöcken, wobei in jeder Netzzuleitung jeweils ein Wicklungsblock integriert ist, sowie zwei Kondensatoren C1 und C2. Diese sind so verschaltet, daß sich vom Netzeingang her gerade die übliche Anordnung eines LC-Tiefpaßfilters ergibt.

Hauptbestandteil der Schaltungsanordnung sind der Gegentaktfrequenzgenerator 3 und der Serienresonanzkreis 5. Der Gegentaktfrequenzgenerator 3 besteht aus zwei alternierend schaltenden Bipolartransistoren T1 und T2, die eine Halbbrücke bilden und mit einer Ansteuerschaltung sowie Vorwiderständen R3 bis R6 und den Rücklaufdioden D3, D4 versehen sind. Die Ansteuerung der Transistoren T1, T2 erfolgt über einen Ringkerntransformator RK1, dessen Primärwicklung im Serienresonanzkreis 5 integriert ist und dessen Sekundärwicklungen RK1b und RK1c die Basis jeweils eines Transistors T1, T2 ansteuern. Für den Anlauf des Gegentaktfrequenzgenerators 3 und die Zündung der Lampe LP sorgen ein Startkondensator C7, ein Diac DK und die Widerstände R2, R7, R8.

Parallel zur Basis-Emitter-Strecke der Transistoren T1, T2 ist jeweils ein ohmscher Widerstand R13 bzw. R14 geschaltet, die beim Umschalten der Transistoren T1, T2 für ein schnelleres Ausräumen der Ladungsträger aus der Raumladungszone sorgen.

Der Serienresonanzkreis 5 besteht aus der Resonanzinduktivität LD, dem Kopplungskondensator C10, dem Resonanzkondensator C12 und der Primärwicklung RK1a des Ringkerntransformators RK1, wobei die Resonanzinduktivität LD, der Kopplungskondensator C10 und die Primärwicklung RK1a zwischen dem Mittenabgriff M1 der Transistoren T1, T2 und die Elektrode E1 der Leuchtstofflampe LP und der Resonanzkondensator C12 in den Elektrodenheizkreis der Lampe LP gelegt ist.

Der Elektrodenheizkreis enthält außer den Elektrodenwendeln E1, E2 der Lampe LP und dem Resonanzkondensator C12 noch eine Diode D1 und einen Kaltleiter R12, der den Heizkreis bei ausreichend vorgeheizten Elektroden E1, E2 unterbricht. Eine Elektrode E2 der Lampe LP ist mit dem Pluspol des Glättungskondensators C6 verbunden, der parallel zu den Schaltstrecken der Transistoren T1, T2 liegt, während die andere Elektrode E1 mit dem Kopplungskondensator C10 verbunden ist.

Das aktive Oberwellenfilter 6 besteht aus zwei in Reihe geschalteten und in Gleichstromvorwärtsrichtung am parallel zum Gleichstromausgang des Netzgleichrichters 2 liegenden Stützkondensator C5 angeschlossenen Dioden D11, D13 und zwei Kondensatoren C8, C9, wobei der Mittenabgriff M3 zwischen den Dioden D11, D13 über den Kondensator C8 zum Mittenabgriff M1 und über den Kondensator C9 zu einem Abgriff M4 zwischen Kopplungskondensator C10 und Elektrode E1 geführt ist.

Die Abschaltvorrichtung 4 besteht aus dem Spannungsteiler R15, R16, der parallel zum Glättungskondensator C6 liegt, aus den Widerständen R1, R10, der Zenerdiode D6 und dem Thyristor Th, wobei der Widerstand R10 und die Zenerdiode D6 parallel zum Widerstand R16 geschaltet sind und der Widerstand R1 die Anode des Thyristors Th mit dem Pluspol des Glättungskondensators C6 verbindet. Die Diode D8 sperrt den Anodenkreis des Thyristors von der Wechselspannung.

Das Kopplungsglied 7 besteht bei den Ausführungsbeispielen 1 und 2 aus einem RC-Glied R9, C11, das an den Mittenabgriff M2 oder M2' zwischen den Filterdrosseln FD1, FD2 und an den Abgriff M5 zwischen Kaltleiter R12 und Resonanzkondensator C12 im Elektrodenheizkreis angeschlossen ist.

Außerdem sind in die Schaltungsanordnung auf der netzfrequenten Seite zwei Sicherungen SI integriert.

Die Funktionsweise des Gegentaktfrequenzgenerators 3 mit Ansteuerung und Anlaufvorrichtung in Kombination mit dem Serienresonanzkreis 5 zum Betrieb der Lampe LP kann dem Buch "Elektronikschaltungen" von W. Hirschmann (Siemens AG), S. 147 - 148, entnommen werden und soll daher hier nicht näher erläutert werden.

Nach dem Zünden der Leuchtstofflampe LP verhindert die Diode D5 ein erneutes Aufladen des Startkondensators C7, so daß der Diac DK während des Lampenbetriebes keine Schaltimpulse auf die Basis des Transistors T2 geben kann.

Die Funktionsweise des aktiven Oberwellenfilters 6 in Kombination mit der Resonanzinduktivität LD und den Kondensatoren C5, C6 ist detailliert in der EP-OS 372 303 beschrieben und soll daher hier nicht näher ausgeführt werden. Das Oberwellenfilter 6 pumpt mit Hilfe der Kondensatoren C8, C9 laufend Energie aus dem Serienresonanzkreis 5 in den Glättungskondensator C6 zurück, so daß eine annähernd sinusförmige Netzstromentnahme möglich wird.

Da die "Pumpwirkung" des Oberwellenfilters 6 auch bei defekter Lampe LP anhält und so der Glättungskondensator C6 überladen werden kann, besitzt die erfindungsgemäße Schaltungsanordnung eine Abschaltvorrichtung 4, die die Spannung am Glättungskondensator C6 überwacht. Erreicht die Spannung am Kondensator C6 einen kritischen Wert, so bricht die Zenerdiode D6 durch und steuert den Thyristor Th in die Leitfähigkeit, wodurch die Basis des Transistors T1 mit dem Minuspol des Netzgleichrichters 2 verbunden und ihr so das Steuersignal entzogen wird. Die Schwingung des Gegentaktfrequenzgenerators wird dadurch unterbrochen. Eine ausführliche Beschreibung der Abschaltvorrichtung 4 findet sich in der EP-PS 276 460.

Die Schaltungsanordnung enthält außerdem einen Kondensator C14, der an den Mittenabgriff M1 und den Emitter des Transistors T2 angeschlossen ist. Der Kondensator C14 trimmt die Rechteckimpulse des Gegentaktfrequenzgenerators 3 auf Trapezform und verringert die beim Ummagnetisieren der Induktivitäten auftretenden Verlustleistungen.

Das Kopplungsglied 7, das bei den ersten beiden Ausführungsbeispielen aus dem RC-Glied R9, C11 besteht, koppelt ein Hochfrequenzsignal beim Abgriff M5 zwischen Resonanzkondensator C12 und Kaltleiter R12 aus und führt es zum Mittenabgriff M2. Dabei sind die Kenngrößen für den Widerstand R9 und den Kondensator C11 experimentell derart optimiert, daß das beim Mittenabgriff M2 eingekoppelte Hochfrequenzsignal die in den Netzzuleitungen auftretenden hochfrequenten Störspannungen mit gleicher Frequenz und annähernd gleicher Amplitude gegenphasig überlagert. Dadurch wird der in den Netzzuleitungen auftretende hochfrequente Störspannungspegel um mehr als 10 dB gesenkt. Werte für R9 und C11 können den Tabellen 1 und 2 (entsprechend der beiden Ausführungsbeispiele) entnommen werden.

Die Mittenabgriffe M2 und M2' zwischen den Filterdrosseln FD1, FD2 sind hochfrequenzmäßig äquivalent, so daß das Kopplungsglied 7 anstatt bei M2 auch bei M2' angeschlossen werden kann. Ferner kann das Kopplungsglied 7 statt mit dem Abgriff M5 auch mit dem Abgriff M4 zwischen der Elektrode E1 und dem Kopplungskondensator C10 verbunden werden, ohne daß die Funktionsfähigkeit der Schaltung dadurch verschlechtert wird.

Die Erfindung beschränkt sich nicht auf die beiden oben erläuterten Ausführungsbeispiele.

So hat sich beispielsweise gezeigt, daß bei einer erfindungsgemäßen Schaltungsanordnung zum Betrieb von Niederdruckentladungslampen der Leistungsstufen zwischen 30 W und 36 W das Kopplungsglied 7 vorteilhafterweise nur aus einem Kondensator mit einer Kapazität von 16 pF besteht, der mit einem Abgriff M6 zwischen dem Glättungskondensator C6 und dem Kollektoranschluß des Transistors T1 sowie mit dem Mittenabgriff M2' verbunden ist. Versuche, das Kopplungsglied 7 bei dieser Schaltungsanordnung entsprechend den Ausführungsbeispielen 1 und 2 zu gestalten, brachten nicht den gewünschten Erfolg.

Andererseits war es auch nicht möglich, bei den Schaltungsanordnungen für die 18 W- bzw. 26 W-Niederdruckentladungslampen, entsprechend der Ausführungsbeispiele 1 und 2, als Kopplungsglied 7 anstelle des Kondensators C11 und des Widerstandes R9 nur einen Kondensator zu verwenden.

Zusammenfassend kann festgestellt werden, daß bei der erfindungsgemäßen Schaltungsanordnung für jede Leistungsstufe die Ausführung des Kopplungsgliedes 7 und dessen Verschaltung erneut experimentell optimiert werden muß.

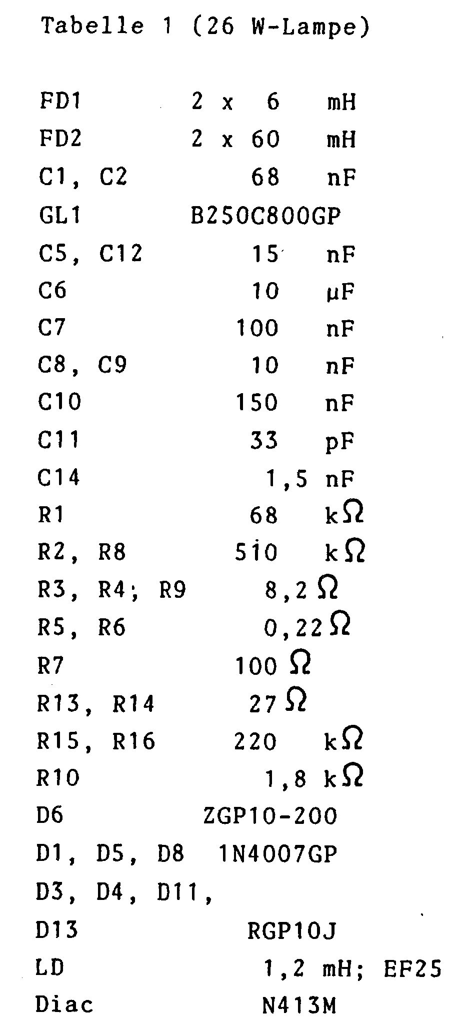

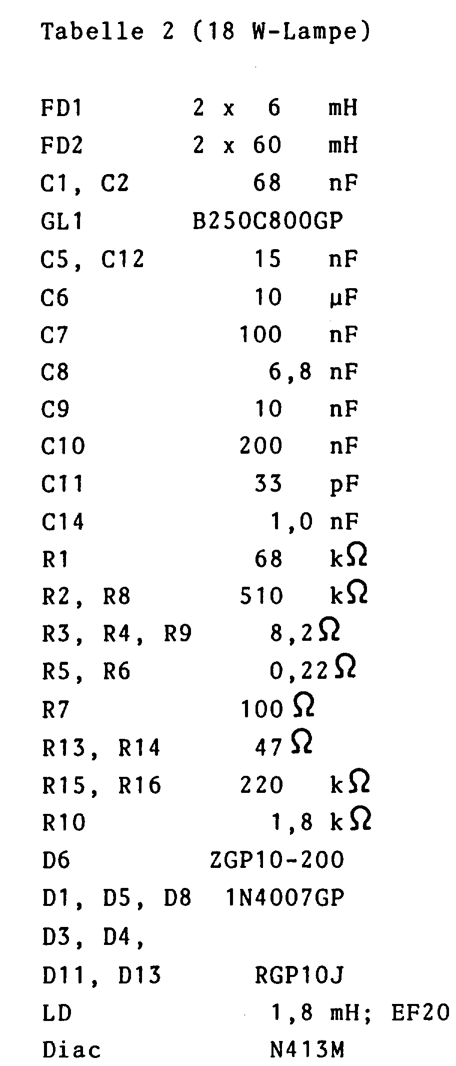

## Patentansprüche

1. Schaltungsanordnung zum Betrieb von Entladungslampen, bestehend aus
- einem Hochfrequenzfilter (1), das zumindest zwei Filterdrosseln (FD1, FD2) mit einem Mittenabgriff (M2, M2') und einen oder mehreren Filterkondensatoren (C1, C2) umfaßt, wobei die Filterdrosseln (FD1, FD2) und die Filterkondensatoren (C1, C2) als LC-Tiefpaßfilter verschaltet sind,
- einem Netzgleichrichter (2),
- einem Gegentaktfrequenzgenerator (3), der mittels alternierend schaltender Transistoren (T1, T2) eine hochfrequente Spannung erzeugt,
- einem Serienresonanzkreis (5), der einen Kopplungskondensator (C10), eine Resonanzinduktivität (LD) und eine Resonanzkapazität (C12) enthält,
- einem Glättungskondensator (C6) parallel zu den Schaltstrecken der Transistoren (T1, T2) des Gegentaktfrequenzgenerators (3),
- Anschlußleitungen für zumindest eine Entladungslampe (LP),
dadurch gekennzeichnet, daß die Schaltungsanordnung ein Kopplungsglied (7) besitzt, über das ein Hochfrequenzsignal am Mittenabgriff (M2, M2') zwischen den Filterdrosseln (FD1, FD2) eingekoppelt wird, wobei die technischen Kenndaten des Kopplungsgliedes (7) derart optimiert sind, daß die von der Schaltungsanordnung in das Stromnetz eingespeisten Hochfrequenz-Störspannungen durch ein am Mittenabgriff (M2, M2') zwischen den Filterdrosseln (FD1, FD2) eingekoppeltes Hochfrequenzsignal, das die gleiche Frequenz wie die hochfrequenten Störspannungen aufweist, gegenphasig überlagert und dadurch weitgehend kompensiert werden.

2. Schaltungsanordnung nach Anspruch 1, dadurch gekennzeichnet, daß das Kopplungsglied (7) aus einem RC-Glied (R9, C11), d.h., aus einem ohmschen Widerstand (R9) und einem Kondensator (C11) besteht.

3. Schaltungsanordnung nach Anspruch 1, dadurch gekennzeichnet, daß das Kopplungsglied (7) aus einem Kondensator besteht.

4. Schaltungsanordnung nach Anspruch 1, dadurch gekennzeichnet, daß der Gegentaktfrequenzgenerator (3) zwei alternierend schaltende Bipolartransistoren (T1, T2) enthält, deren Ansteuerungssignal aus dem freischwingenden Serienresonanzkreis (5) entnommen wird.

5. Schaltungsanordnung nach Anspruch 4, dadurch gekennzeichnet, daß der Gegentaktfrequenzgenerator (3) zwei alternierend schaltende Bipolartransistoren (T1, T2) enthält, deren Ansteuerung über eine Stromrückkopplung mittels eines Ringkerntransformators (RK1) erfolgt.

6. Schaltungsanordnung nach Anspruch 4, dadurch gekennzeichnet, daß der Gegentaktfrequenzgenerator (3) zwei alternierend schaltende Bipolartransistoren (T1, T2) enthält, deren Ansteuerung durch jeweils eine Hilfswicklung erfolgt, die über die Lampendrossel (LD) gewickelt sind.

## Claims

1. Circuit arrangement for operating discharge lamps, comprising
- a high-frequency filter (1) which includes at least two filter chokes (FD1, FD2) having a centre tap (M2, M2') and one or more filter capacitors (Cl, C2), the filter chokes (FD1, FD2) and the filter capacitors (C1, C2) being wired up as an LC low-pass filter,
- a mains rectifier (2),
- a push-pull frequency generator (3) which generates a high-frequency voltage by means of alternately switching transistors (T1, T2),
- a series resonant circuit (5) which contains a coupling capacitor (C10), a resonance inductor (LD) and a resonance capacitor (C12),
- a smoothing capacitor (C6) in parallel with the switching paths of the transistors (T1, T2) of the push-pull frequency generator (3),
- connecting leads for at least one discharge lamp (LP),
characterized in that the circuit arrangement has a coupling element (7) via which a high-frequency signal is coupled in at the centre tap (M2, M2') between the filter chokes (FD1, FD2), the technical characteristics of the coupling element (7) being optimized in such a way that the high-frequency interference voltages fed into the mains supply by the circuit arrangement are overlaid in antiphase by a high-frequency signal which is coupled in at the centre tap (M2, M2') between the filter chokes (FD1, FD2) and has the same frequency as the high-frequency interference voltages, and are thereby largely compensated.

2. Circuit arrangement according to Claim 1, characterized in that the coupling element (7) consists of an RC element (R9, C11), that is to say of an ohmic resistor (R9) and a capacitor (C11).

3. Circuit arrangement according to Claim 1, characterized in that the coupling element (7) consists of a capacitor.

4. Circuit arrangement according to Claim 1, characterized in that the push-pull frequency generator (3) contains two alternately switching bipolar transistors (T1, T2) whose drive signal is taken from the freely oscillating series resonant circuit (5).

5. Circuit arrangement according to Claim 4, characterized in that the push-pull frequency generator (3) contains two alternately switching bipolar transistors (T1, T2) whose drive is carried out via current feedback by means of a toroidal transformer (RK1).

6. Circuit arrangement according to Claim 4, characterized in that the push-pull frequency generator (3) contains two alternately switching bipolar transistors (T1, T2) whose drive is carried out by means of an auxiliary winding in each case which is wound over the lamp choke (LD).

## Revendications

1. Montage pour faire fonctionner des lampes à décharge, constitué par
- un filtre à haute fréquence (1), qui comprend au moins deux bobines d'inductance (FD1,FD2) comportant une prise médiane (M2,M2') et un ou plusieurs condensateurs (C1,C2), les bobines d'inductance (FD1,FD2) et les condensateurs (C1,C2) du filtre étant connectées de manière à former des filtres passe-bas LC;
- un redresseur (2) relié au réseau,
- un générateur de fréquence symétrique (3), qui produit une tension à haute fréquence au moyen de transistors (T1,T2) qui commutent alternativement,
- un circuit résonnant série (5) , qui contient un condensateur de couplage (C10), une bobine d'inductance de résonance (LD) et une capacité de résonance (C12),
- un condensateur de lissage (C6) parallèle aux sections de commutation des transistors (T1,T2) du générateur de fréquence symétrique (3),
- des conducteurs de raccordement pour au moins une lampe à décharge (LP),
caractérisé par le fait que le montage possède un circuit de couplage (7), au moyen duquel un signal à haute fréquence est injecté au niveau de la prise médiane (M2,M2') entre les bobines d'inductance (FD1,FD2) du filtre, les données caractéristiques techniques du circuit de couplage (7) étant optimisées de telle sorte qu'aux tensions parasites à haute fréquence, injectées par le montage dans le réseau d'alimentation en courant, est superposé, en opposition de phase, un signal à haute fréquence qui est injecté au niveau de la prise médiane (M2,M2') entre les bobines d'inductance (FD1,FD2) du filtre et possède la même fréquence que les tensions parasites à haute fréquence, et que les tensions parasites sont de ce fait largement compensées.

2. Montage suivant la revendication 1, caractérisé par le fait que le circuit de couplage (7) est constitué par un circuit RC (R9,C11), c'est-à-dire par une résistance ohmique (R9) et par un condensateur (C11).

3. Montage suivant la revendication 1, caractérisé par le fait que le circuit de couplage (7) est constitué par un condensateur.

4. Montage suivant la revendication 1, caractérisé par le fait que le générateur de fréquence symétrique (3) possède deux transistors bipolaires (T1,T2), qui commutent d'une manière alternée et dont le signal de commande est prélevé du circuit résonnant série (5) à oscillations libres.

5. Montage suivant la revendication 4, caractérisé par le fait que le générateur de fréquence symétrique (3) possède deux transistors bipolaires (T1,T2), qui commutent en alternance et dont la commande est réalisée par l'intermédiaire d'une réaction de courant à l'aide d'un transformateur à noyau annulaire (RK1).

6. Montage suivant la revendication 4, caractérisé par le fait que le générateur de fréquence symétrique (3) possède deux transistors bipolaires (T1,T2), qui commutent d'une manière alternée et dont la commande est réalisée au moyen d'enroulements auxiliaires respectifs, qui sont enroulés sur la bobine d'inductance (LD) de la lampe.
